# EUROPÄISCHE PATENTANMELDUNG

(11) **EP 2 564 691 A1**
(43) Veröffentlichungstag der Anmeldung: **06.03.2013**
(21) Anmeldenummer: 11179169.5
(22) Anmeldetag: 29.08.2011
(51) Int. Cl.: A01J 25/00, A23C 19/09

(54) **Verfahren zum Verteilen von Lebensmittelstücken in Käselaiben bei der Käseherstellung**

(71) Anmelder: Peter Odermatt Management AG, 6373 Ennetbürgen (CH)
(72) Erfinder: Odermatt, Peter, 6373 Ennetbürgen (CH)
(74) Vertreter: Irniger, Ernst

(57) **Zusammenfassung**

Die Erfindung betrifft ein Verfahren zum Verteilen von Lebensmittelstücken in einem Käselaib bei der Käseherstellung, welches mindestens folgende Schritte aufweist:
a) Abfüllen einer ersten Teilmenge von einer Gesamtmenge an Käsebruchmasse in eine definierte Anzahl von Käseformen, wobei jede der Käseformen jeweils ein bestimmtes Volumen aufweist;
b) Zufügen eines ersten Anteils eines Gesamtanteils der Lebensmittelstücke (12) in die verbleibende Menge der Käsebruchmasse und Mischen der Lebensmittelstücke mit der Käsebruchmasse;
c) Abfüllen einer zweiten definierten Teilmenge der Käsebruchmasse aus Schritt b) in die Käseformen;
d) Zufügen des restlichen Anteils der Lebensmittelstücke in die restliche verbleibende Käsebruchmasse;
e) Abfüllen der gemäss Schritt d) erhaltenen Käsebruchmasse in die Käseformen.

## Beschreibung

Die vorliegende Erfindung betrifft ein Verfahren zum Verteilen von Lebensmittelstücken in Käselaiben bei der Käseherstellung nach Anspruch 1.

Eine Aufgabe der vorliegenden Erfindung bestand darin, ein Verfahren zum Verteilen von Lebensmittelstücken in Käselaiben zu schaffen, welches eine gleichmässige Verteilung der Lebensmittelstücke im Käselaib ermöglicht.

Die Aufgabe wird gelöst durch die Merkmale von Anspruch 1. Weitere Ausführungsformen sind in abhängigen Ansprüchen dargestellt.

Vorgeschlagen wird ein Verfahren zum Verteilen von Lebensmittelstücken in einem Käselaib bei der Käseherstellung, welches mindestens folgende Schritte aufweist:
a) Abfüllen einer ersten Teilmenge von einer Gesamtmenge der Käsebruchmasse aus einem Behälter in eine definierte Anzahl von Käseformen, wobei jede der Käseformen jeweils ein bestimmtes Volumen aufweist;
b) Zufügen eines ersten Anteils des Gesamtanteils der Lebensmittelstücke in die im Behälter verbleibende Menge der Käsebruchmasse und Mischen der Lebensmittelstücke mit der Käsebruchmasse;
c) Abfüllen einer zweiten Teilmenge der Käsebruchmasse aus Schritt b) in die Käseformen;
d) Zufügen des restlichen Anteils der Lebensmittelstücke in die restliche Käsebruchmasse im Behälter und Mischen der Lebensmittelstücke mit der Käsebruchmasse;
e) Abfüllen der gemäss Schritt d) erhaltenen Käsebruchmasse in die Käseformen.

Dadurch wird erreicht, dass die zugefügten

Lebensmittelstücke gleichmässig im Innern des Käselaibs bis nahe an die Aussenseite des Käses bzw. der Käserinde heran verteilt werden können, ohne dass dabei Lebensmittelstücke aus der äusseren Oberfläche bzw. Rinde der Käselaibe hervortreten.

Eine Ausführungsform ist, dass folgender Schritt durchgeführt wird:
- Dicklegen der zu verkäsenden Milch durch Durchführen einer Labfällung oder einer Säurefällung vor Ausführung von Schritt a).

Dadurch kann eine gleichmässige Verteilung der Lebensmittelstücke in einem Käselaib bei Käseherstellungsverfahren zum Einsatz kommen. Eine weitere Ausführungsform ist, dass folgender Schritt ausgeführt wird:
- Zufügen von pflanzlichen und/oder tierischen Lebensmittelstücken gemäss den Schritten b) und d).

Dadurch können unterschiedliche Käsearten, beispielsweise Halbhart- oder Hartkäse in vielfältigen Geschmacksrichtungen hergestellt werden.

Eine weitere Ausführungsform ist, dass die Lebensmittelstücke geräucherte und/oder ungeräucherte Trockenfleischstücke, insbesondere Bündner Trockenfleischstücke, sind. Dadurch kann beispielsweise ein würziger Bergkäse mit Bündner Trockenfleischstücken hergestellt werden. Es ist auch denkbar, geräucherte Trockenfleischprodukte wie z.B. Landjäger und/oder ungeräucherte Trockenfleischprodukte wie z.B. Salami zu verwenden.

Eine weitere Ausführungsform ist, dass die Lebensmittelstücke im Wesentlichen würfelförmig ausgebildet sind.

Eine weitere Ausführungsform ist, dass die Lebensmittelstücke eine Abmessung von 6x6x6 mm aufweisen.

Eine weitere Ausführungsform ist, dass unter Schritt a) 5% bis 30%, vorzugsweise 8% bis 20%, vorzugsweise 9% bis 12%, vorzugsweise 10% der Käsebruchmasse in die Käseformen abgefüllt wird. Dadurch wird ein Absinken der in der Folge zuzugebenden Lebensmittelstücken bis auf den Boden der jeweiligen Käseform verhindert.

Eine weitere Ausführungsform ist, dass die Gesamtmenge zu verkäsender Milch 4'400 Liter entspricht.

Eine weitere Ausführungsform ist, dass 84 Käseformen mit einem Durchmesser von 27.5 cm und einer Höhe von ca. 37 cm vorgesehen sind.

Eine Ausführungsform ist, dass vor dem Schritt b) ein Schritt a1) ausgeführt wird:
a1) Autoklavieren der Gesamtmenge der Lebensmittelstücke und Abkühlen der Lebensmittelstücke.

Dadurch wird sichergestellt, dass mikrobiologisch einwandfreie Lebensmittelstücke verarbeitet werden.

Eine weitere Ausführungsform ist, dass dem Schritt b) eingefüllte Teilmenge der Lebensmittelstücke 50% bis 70%, vorzugsweise 55% bis 65%, vorzugsweise 58% bis 62%, vorzugsweise 60% ist.

Eine weitere Ausführungsform ist, dass gemäss der unter Schritt c) überführten Teilmenge der Käsebruchmasse etwa die Hälfte der nach gemäss Schritt a) Gesamtmenge der Käsebruchmasse noch im Behälter verbleibt.

Ein weiterer Aspekt der Erfindung betrifft einen Käse, z.B. einen Halbhartkäse oder Hartkäse, welcher durch ein Verfahren zum Verteilen von Lebensmittelstücken in einem Käselaib bei der Käseherstellung erhalten wird.

Ausführungsbeispiele der vorliegenden Erfindung werden nachstehend anhand von Figuren noch näher erläutert. Es zeigen
- Fig. 1: schematisch, ein Käseherstellungsverfahren;
- Fig. 2: schematisch, ein Behälter, eine Käseform und ein Gesamtanteil von Lebensmittelstücken;
- Fig. 3: schematisch, ein aufgeschnittener Käselaib und eine Käseportion;
- Fig. 4a: Tabellarische Informationen zu Käsetypen und zur Zusammensetzung von Bündner-Trockenfleischstücken; und
- Fig. 4b: ein Beispiel einer Zusammensetzung vollfetten Halbhartkäses mit Bündner-Trockenfleisch-Stücken.

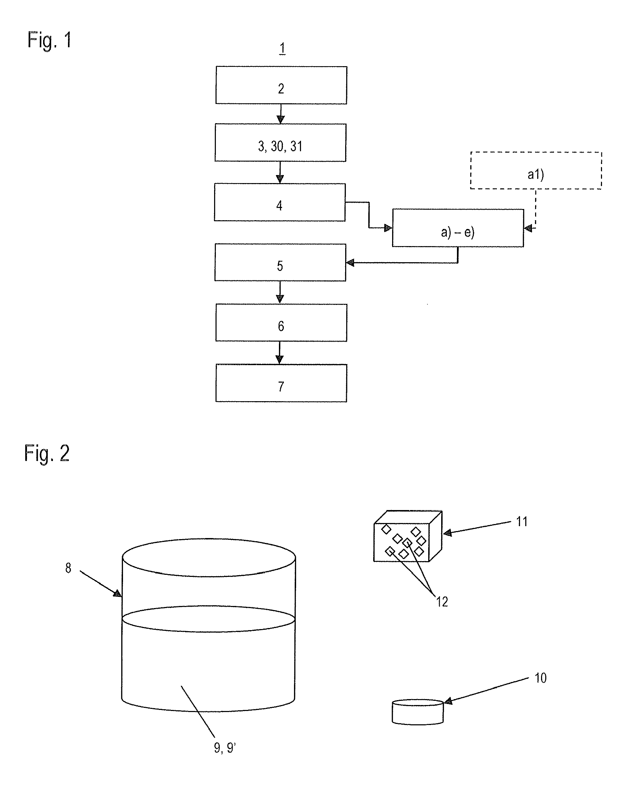

In Figur 1 ist schematisch ein Käseherstellungsverfahren 1 dargestellt. In einem Milchvorbereitungsschritt 2 wird die zu verkäsende Milch beispielsweise durch Separieren auf einen bestimmten Fettgehalt eingestellt, beispielsweise auf einen Fettgehalt von 2,9 Volumen-%. Der Fettgehalt der zu verkäsenden Milch ist abhängig von dem zu erzielenden Käseprodukt, d.h. ob z.B. ein Dreiviertelfettkäse oder z.B. ein Vollfettkäse hergestellt werden soll. Üblicherweise sind die jeweiligen Fettstufen in den entsprechenden nationalen gesetzlichen Lebensmittelverordnungen festgelegt. Eine anschliessende Dicklegung 3 der zu verkäsenden Milch erfolgt dabei entweder mittels der bekannten Labgerinnung 30 zur Ausfällung des Kaseins oder der bekannten Säuregerinnung 31 zur Ausfällung des Kaseins, beispielsweise in einem traditionellen offenen Käsekessi, einem Käsefertiger oder einer für Grosskäsereien geeigneten Käseproduktionsvorrichtung. Unter einem Käsekessi, Käsefertiger bzw. einer Käseproduktionsvorrichtung ist ein Behälter zu verstehen, in welchem die zu verkäsende Milch dickgelegt wird. Dabei entspricht die Menge der zu verkäsenden Milch etwa der Menge der Käsebruchmasse. Durch Abfüllen der Käsebruchmasse während der Käseherstellung in die Formen, wird ein Grossteil der Sirte aus der Käseform abgeführt und der Käselaib wird entsprechend leichter an Gewicht. Beispielsweise kann aus 10 Litern Kuhmilch ca. 1 kg Halbhartkäse gewonnen werden. Für die Herstellung von thermisierten Käsen, wird die zu verkäsende Rohmilch vor der Dicklegung 3 vorher noch thermisiert, um unerwünschte Keime abzutöten bzw. zu reduzieren. Die Rohmilch kann beispielsweise Kuhmilch, Schafsmilch, Ziegenmilch etc. sein. Im Anschluss an die Dicklegung 3 wird eine Käsebruchmasse durch Schneiden 4 der dickgelegten Milch mittels einer Käseharfe im Behälter durchgeführt. Je nach Rezeptur kann vor dem Schneiden 4 der Käsebruch mit der Sirte auf eine bestimmte Temperatur und über eine bestimmte Zeitdauer erwärmt werden (auch unter dem Begriff "Brennen" bekannt). Beispielsweise wird der Käsebruch und die Sirte für die Herstellung eines Käses von einer bestimmten Festigkeit z.B. eines Halbhartkäses mit 54% bis 65% wff (Prozent Wassergehalt in fettfreien Käse gemäss der Schweizerischen Lebensmittelverordnung) auf eine Temperatur zwischen etwa 37°C bis etwa 41°C erwärmt oder z.B. zur Herstellung eines Hartkäses mit 50% bis 54% wff auf eine Temperatur zwischen etwa 50°C bis etwa 55°C erwärmt. Vor einem Ausformen 5, einem im Anschluss an das Ausformen 5 folgende Pressen 6 und einem an das Pressen 6 folgende Reifen 7 der Käselaibe, werden nach dem Schneiden 4 mindestens weitere Schritte a) bis e) eines Verfahrens zum Verteilen von Lebensmittelstücken in Käselaiben durchgeführt. Allenfalls kann bei Bedarf zusätzlich ein Schritt a1) zum Sterilisieren der Lebensmittelstücke vor dem Schritt b) durchgeführt werden. Unter Schritt a) wird eine erste Teilmenge einer Gesamtmenge der Käsebruchmasse in eine definierte Anzahl von Käseformen abgefüllt, wobei jede der Käseformen ein bestimmtes Volumen aufweist (nicht dargestellt in Figur 1). Beispielsweise sind es 84 Käseformen, wobei jede der Käseformen eine Höhe von ca. 37 cm sowie einen Durchmesser von 27.5 cm aufweist. Über diese Käseformen können Käselaibe ausgeformt werden, von denen jeder etwa einen Durchmesser von 27.5 cm, eine Höhe zwischen 7 cm bis 8.5 cm und ein Gewicht von etwa 5 kg aufweist. Es sind aber auch kleinere oder grössere Abmessungen bzw. Volumina der Käseformen und der Käselaibe denkbar. Die Gesamtmenge der eingedickten Milch kann beispielsweise 4'400 Liter Kuhmilch (entspricht etwa 4'530 kg) betragen. Je nach Fassungsvermögen des Behälters kann die Gesamtmenge der Käsebruchmasse analog der eingedickten Milch grösser oder kleiner sein. Dabei wird unter Schritt a) etwa 5% bis 30%, vorzugsweise etwa 8% bis 20%, wie etwa 9% bis 12%, wie beispielsweise etwa 10% der Käsebruchmasse in eine bestimmte Anzahl von Käseformen abgefüllt. Das Abfüllen kann beispielsweise mittels eines Käseschlittens erfolgen. Beispielsweise werden 4 Schlittenfahrten über eine Distanz von 6 Metern pro Schlittenfahrt durchgeführt. Eine Schlittenfahrt über die Strecke von 6 Meter dauert etwa 8 Sekunden. Beispielsweise wird dabei die Käsebruchmasse in 84 Käseformen, welche in Reihen von 1 bis 14 Käseformen angeordnet sind, abgefüllt. Im Anschluss an Schritt a) wird unter Schritt b) ein erster Anteil eines Gesamtanteils von Lebensmittelstücken in die im Behälter (d.h. Käsekessi, Käsefertiger oder Käseproduktionsvorrichtung) verbliebene Käsebruchmasse zugefügt und die Lebensmittelstücke mit der Käsebruchmasse gemischt, z.B. durch Rühren. Der Gesamtanteil der Lebensmittelstücke kann beispielsweise etwa 21 kg betragen. Der unter dem Schritt b) eingefüllte Anteil der Lebensmittelstücke beträgt etwa 50% bis 70%, vorzugsweise etwa 55% bis 65%, wie etwa 58% bis 62% oder beispielsweise etwa 60% des Gesamtanteils der Lebensmittelstücke. Weiter wird unter Schritt b) der Anteil der zugefügten Lebensmittelstücken mit der im Behälter verbleibenden Käsebruchmasse gemischt, z.B. durch Rühren. Im Anschluss von Schritt b), wird unter Schritt c) eine zweite definierte Teilmenge der Käsebruchmasse aus dem Käsekessi, dem Käsefertiger bzw. der Käseproduktionsvorrichtung in die bestimmte Anzahl Käseformen überführt. Dabei verbleibt noch etwa die Hälfte der ursprünglichen Gesamtmenge der Käsebruchmasse als restliche Käsebruchmasse im Behälter. Beispielsweise entspricht die restliche Käsebruchmasse im Behälter etwa 2'200 kg. In einem nächsten Schritt d) wird der restliche Anteil der Lebensmittelstücke der restlichen im Käsekessi, Käsefertiger bzw. in der Käseproduktionsvorrichtung verbliebenen Käsebruchmasse zugefügt und die Lebensmittelstücke mit der Käsebruchmasse z.B. durch Rühren gemischt. Nachfolgend wird in einem weiteren Schritt e), die unter Schritt d) erhaltene restliche Käsebruchmasse mit der restlichen Teilmenge der Lebensmittelstücke in die Käseformen eingefüllt. Weiter ist es denkbar, dass die unter den Schritten b) und d) zugefügten Lebensmittelstücke pflanzlichen und/oder tierischen Ursprungs sind. Beispielsweise können die tierischen Lebensmittelstücke geräuchert sein, z.B. in Form von geräucherten Trockenwurstwaren, beispielsweise in Form von Landjägerstücken und/oder ungeräuchert sein, z.B. in Form von Bündner Trockenfleischstücken und/oder Salami. Die der Käsebruchmasse zugegebenen Lebensmittelstücke sind im Wesentlichen beispielsweise würfelförmig ausgebildet. Es ist auch denkbar, die Lebensmittelstücke in Form von Streifen oder jeder beliebigen anderen Form zu verwenden. Weiter ist denkbar, dass vor dem Schritt a) ein weiterer Schritt a1) durchgeführt wird. Der weitere Schritt a1) besteht aus dem Autoklavieren der Gesamtmenge der zur Abfüllung vorgesehenen Lebensmittelstücke und anschliessendem Abkühlen der Lebensmittelstücke unter sterilen Bedingungen. Dabei kann die Autoklavierung beispielsweise 24 Stunden vorher erfolgen. Es ist aber auch denkbar, die Autoklavierung zu einem anderen Zeitpunkt durchzuführen. Weiter ist denkbar, eine alternative thermische oder andere geeignete Keimabtötungsmethode zu verwenden. Dabei kann eine mikrobiologisch einwandfreie Qualität der Lebensmittelstücke gewährleistet werden.

In Figur 2 ist schematisch ein mit einer bestimmten Gesamtmenge 9' Käsebruchmasse 9 gefüllter Behälter 8, eine Käseform 10 sowie ein bestimmter Gesamtanteil 11 mit Lebensmittelstücken 12 dargestellt, wie sie zum Verteilen von Lebensmittelstücken 12 nach den zu Figur 1 beschriebenen Verfahren eingesetzt werden können.

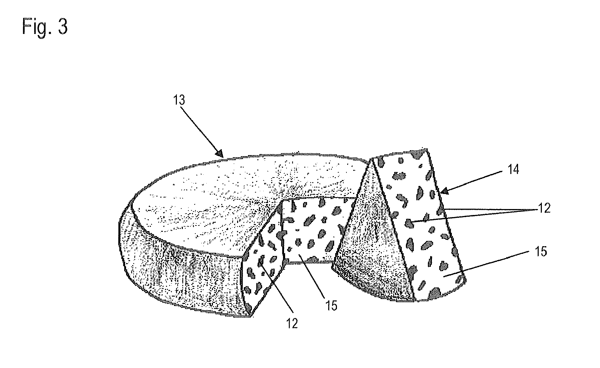

In Figur 3 ist schematisch ein aufgeschnittener Käselaib 13 und eine daraus abgeschnittene Käseportion 14 dargestellt. Der Käselaib 13 wurde nach dem unter dem vorgängig beschriebenen Herstellungsverfahren 1 hergestellt. Der Käselaib 13 wie auch die Käseportion 14 weisen jeweils in einem Käseteig 15 eine Anzahl gleichmässig verteilter Lebensmittelstücke 12 auf. Dabei können die Lebensmittelstücke 12 pflanzlicher und/oder tierischer Herkunft sein. Die der Käsebruchmasse zugegebenen Lebensmittelstücke sind im Wesentlichen würfelförmig ausgebildet. Die würfelförmigen Lebensmittelstücke 12 weisen dabei beispielsweise eine Abmessung von etwa 6x6x6 mm auf. Es ist aber auch denkbar, die Abmessungen der Würfel kleiner oder grösser als 6x6x6 mm vorzusehen. Beispielsweise können diese im Falle von tierischen Lebensmittelstücken 12 geräuchert sein, z.B. in Form von Landjägerstücken und/oder ungeräuchert sein, z.B. in Form von Bündner Trockenfleischstücken und/oder Salami. Die Bündner Trockenfleischstücke weisen dabei beispielsweise etwa einen Wassergehalt von etwa 46% auf, welcher über eine Trocknungszeit von etwa 16 Wochen eingestellt wurde. Der Kochsalzgehalt der Bündner-Trockenfleischstücke liegt etwa bei 5%.

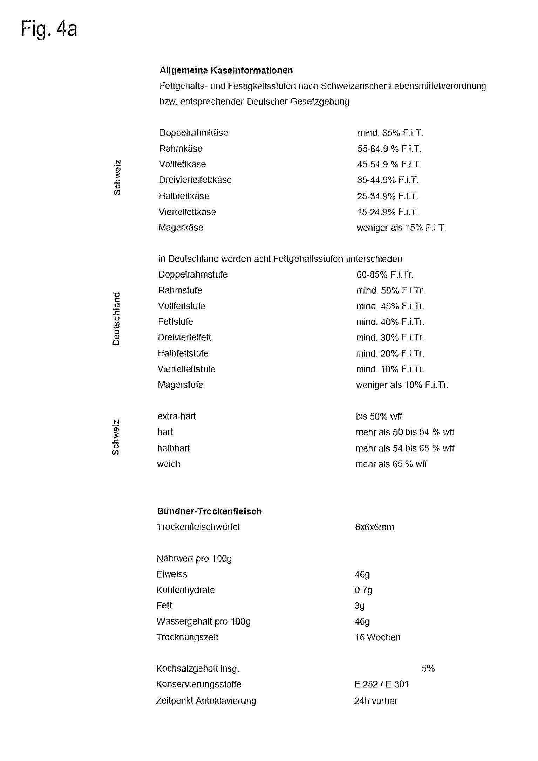

In Figur 4a ist eine Tabelle mit beispielhaften Informationen zu Käsetypen und zur beispielhaften Zusammensetzung von Bündner Trockenfleisch dargestellt. Das Bündner Trockenfleisch kann beispielsweise für das unter Figur 1 beschriebene Verfahren eingesetzt werden.

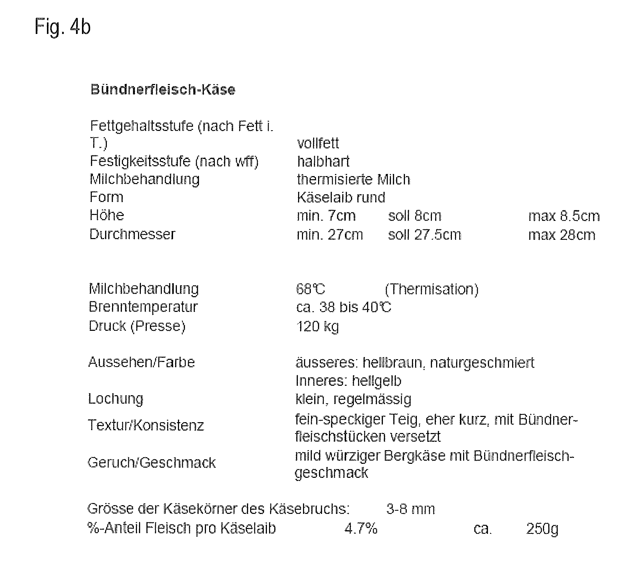

In Figur 4b ist ein Beispiel einer Zusammensetzung vollfetten Halbhartkäses mit Bündner-Trockenfleischstücken dargestellt. Weiter sind darin Angaben zu den sensorischen Eigenschaften des Halbhartkäses aufgeführt.

## Patentansprüche

1. Verfahren zum Verteilen von Lebensmittelstücken (12) in einem Käselaib (13) bei der Käseherstellung (1), welches mindestens folgende Schritte aufweist:
a) Abfüllen einer ersten Teilmenge von einer Gesamtmenge (9') an Käsebruchmasse (9) aus einem Behälter (8) in eine definierte Anzahl von Käseformen (10), wobei jede der Käseformen (10) jeweils ein bestimmtes Volumen aufweist;
b) Zufügen eines ersten Anteils eines Gesamtanteils (11) der Lebensmittelstücke (12) in die im Behälter (8) verbleibende Menge der Käsebruchmasse (9) und Mischen der Lebensmittelstücke (12) mit der Käsebruchmasse (9);
c) Abfüllen einer zweiten Teilmenge der Käsebruchmasse (9) aus Schritt b) in die Käseformen (10);
d) Zufügen des restlichen Anteils der Lebensmittelstücke (12) in die restliche im Behälter (8) verbliebene Käsebruchmasse (9);
e) Abfüllen der gemäss Schritt d) erhaltenen Käsebruchmasse (9) in die Käseformen (10).

2. Verfahren nach Anspruch 1, **gekennzeichnet durch**:
- Dicklegen (3) von zu verkäsender Milch **durch** Durchführen einer Labfällung (30) oder einer Säurefällung (31) vor Ausführung von Schritt a).

3. Verfahren nach Anspruch 1 oder 2, **gekennzeichnet durch**:
- Zufügen von pflanzlichen und/oder tierischen Lebensmittelstücken (12) gemäss den Schritten b) und d).

4. Verfahren nach Anspruch 3, **dadurch gekennzeichnet, dass** die Lebensmittelstücke (12) geräucherte und/oder ungeräucherte Trockenfleischstücke, insbesondere Bünder Trockenfleischstücke, sind.

5. Verfahren nach einem der Ansprüche 1 bis 4, **dadurch gekennzeichnet, dass** die Lebensmittelstücke (12) im Wesentlichen würfelförmig ausgebildet sind.

6. Verfahren nach Anspruch 5, **dadurch gekennzeichnet, dass** die Lebensmittelstücke (12) eine Abmessung von 6x6x6 mm aufweisen.

7. Verfahren nach einem der Ansprüche 1 bis 6, **dadurch gekennzeichnet, dass** unter Schritt a) 5% bis 30%, vorzugsweise 8% bis 20%, vorzugsweise 9% bis 12%, vorzugsweise 10% der Käsebruchmasse in die Käseformen (10) abgefüllt wird.

8. Verfahren nach einem der Ansprüche 1 bis 7, **dadurch gekennzeichnet, dass** die Gesamtmenge (9') an Käsebruchmasse 4'400 Liter entspricht.

9. Verfahren nach einem der Ansprüche 1 bis 8, **dadurch gekennzeichnet, dass** 84 Käseformen (10) mit einem Durchmesser von 27.5 cm und einer Höhe von ca. 37 cm vorgesehen sind.

10. Verfahren nach einem der Ansprüche 1 bis 9, **dadurch gekennzeichnet, dass** vor dem Schritt b) ein Schritt a1) ausgeführt wird:
a1) Autoklavieren der Gesamtmenge der Lebensmittelstücke (12) und Abkühlen der Lebensmittelstücke (12).

11. Verfahren nach einem der Ansprüche 1 bis 10, **dadurch gekennzeichnet, dass** unter dem Schritt b) eingefüllte Teilmenge der Lebensmittelstücke (12) 50% bis 70%, vorzugsweise 55% bis 65%, vorzugsweise 58% bis 62%, vorzugsweise 60% ist.

12. Verfahren nach einem der Ansprüche 1 bis 11, **dadurch gekennzeichnet, dass** gemäss der unter Schritt c) überführten Teilmenge der Käsebruchmasse (9) etwa die Hälfte der nach gemäss Schritt a) Gesamtmenge (9') der Käsebruchmasse (9) noch im Behälter (8) verbleibt.

13. Käse, vorzugsweise Halbhartkäse oder Hartkäse, erhalten durch ein Verfahren zum Verteilen von Lebensmittelstücken (12) in einem Käselaib (13) bei der Käseherstellung (1) nach einem der Ansprüche 1 bis 12.
